# FASCICULE DE BREVET EUROPEEN

(11) **EP 4 088 046 B1**
(45) Date de publication et mention de la délivrance du brevet: **07.08.2024**
(21) Numéro de dépôt: 20828042.0
(22) Date de dépôt: 03.12.2020
(51) Int. Cl.: F16H 59/18, F16H 63/46, B60W 20/00, F16H 61/04, B60W 30/19, F16H 61/16

(54) **PROCÉDÉ DE COMMANDE DE COUPLAGE D'UN TRAIN DE ROUE À UNE MACHINE MOTRICE NOTAMMENT DANS UN VÉHICULE HYBRIDE**
VERFAHREN ZUM STEUERN DER KUPPLUNG EINES RADZUGS AN EINE ANTRIEBSMASCHINE, INSBESONDERE BEI EINEM HYBRIDFAHRZEUG
METHOD FOR CONTROLLING THE COUPLING OF A WHEEL TRAIN TO A DRIVE MACHINE, IN PARTICULAR IN A HYBRID VEHICLE

(30) Priorité: 09.01.2020 FR 2000172
(43) Date de publication de la demande: 16.11.2022
(73) Titulaire: Stellantis Auto SAS, 78300 Poissy (FR)
(72) Inventeur: BARDET, Arnaud, 78150 LE CHESNAY (FR); FREIRE SUAREZ, Violette, 78150 LE CHESNAY (FR); BASTIANI, Philippe, 78300 POISSY (FR); HABBANI, Ridouane, 92600 ASNIERES SUR SEINE (FR); MILHAU, Yohan, 78630 ORGEVAL (FR); ROCQ, Gaetan, 78125 LA BOISSIERE ECOLE (FR)
(86) Numéro de dépôt international: PCT/FR2020/052264
(87) Numéro de publication internationale: WO 2021/140282

(56) Documents cités:
- EP-A1- 2 589 839
- US-A- 5 024 305
- US-A- 5 025 684
- US-A- 5 113 721
- US-B2- 6 834 224
- US-B2- 8 676 458
- US-B2- 9 574 659

## Description

L'invention concerne de manière générale la commande de couplage d'un train de roue à une machine motrice dans un véhicule terrestre, tel qu'un véhicule automobile hydride, mais pas exclusivement. Plus particulièrement, l'invention se rapporte à un procédé de commande de couplage d'un train de roue à une machine motrice dans une chaîne de traction de véhicule intégrant une boîte de vitesse automatique. L'invention trouve une application privilégiée, mais non exclusive, dans les véhicules hybrides comprenant au moins deux machines motrices, de type thermique, électrique et/ou hydraulique.

La terminologie « boîte de vitesse automatique » doit ici être interprétée de manière large et recouvre notamment les boîtes de vitesse manuelles pilotées ou robotisées, et les boîtes de vitesse de type à double embrayage, non exclusivement. Ainsi, selon le type de boîte de vitesse, l'organe de couplage associé pourra être un embrayage à sec ou humide.

De manière générale, dans les véhicules équipés d'une boîte de vitesse automatique, un calculateur de commande, comme par exemple le calculateur de contrôle moteur, gère le couplage à la machine motrice du train de roue auquel est associée la boîte de vitesse automatique et gère le rapport à engager dans la boîte de vitesse automatique à partir notamment de la position de la pédale d'accélérateur. La position de la pédale d'accélérateur représente un couple à la roue demandé par le conducteur du véhicule.

Dans le calculateur de commande, des première et deuxième fonctions distinctes et indépendantes décident respectivement du couplage du train de roue à la machine motrice et du rapport à engager dans la boîte de vitesse.

Ainsi, la première fonction susmentionnée décide du couplage du train de roue à la machine motrice lorsque des conditions déterminées sont satisfaites et, en particulier, lorsque le couple à la roue demandé par le conducteur du véhicule est supérieur à un seuil prédéfini. Cette première fonction ne tient pas compte dans sa décision d'une évolution du rapport à engager dans la boîte de vitesse, rapport à engager qui est décidé lui par la deuxième fonction susmentionnée.

La deuxième fonction détermine le rapport à engager dans la boîte de vitesse en fonction notamment, de manière indirecte, de la position de la pédale d'accélérateur. De manière générale, plus la pédale d'accélérateur est enfoncée et plus le rapport à engager dans la boîte de vitesse est faible.

Dans l'état de la technique, il est connu d'interdire une demande de changement de rapport dans des conditions de roulage particulières. L'interdiction de changement de rapport, désignée « correction dynamique » par l'homme du métier, peut intervenir notamment dans des situations de relevé de pied rapide de la pédale d'accélérateur, de roulage dans une forte descente en pied levé, de roulage dans un virage infligeant un certain niveau d'accélération latérale au véhicule, d'intervention du système de contrôle de trajectoire du véhicule dit « ESP » (pour « Electronic Stability Program » en anglais), de détection d'un patinage excessif des roues motrices, et d'enfoncement progressif de la pédale d'accélérateur jusqu'à stabilisation de cette dernière.

Dans la situation de vie d'un appui progressif sur la pédale d'accélérateur par le conducteur, l'entité inventive a constaté la possible survenue d'un évènement préjudiciable à l'agrément de conduite.

En effet, lors d'un appui progressif sur la pédale d'accélérateur, la première fonction peut décider le couplage du train de roue avec le rapport qui est alors déterminé par la deuxième fonction, et ensuite, au fur et à mesure de l'enfoncement de la pédale d'accélération, la deuxième fonction peut décider de changer de rapport, et cela plusieurs fois jusqu'à ce que la pédale d'accélérateur n'évolue plus.

Le calculateur de commande chargé de la réalisation des changements de rapport et du couplage du train de roue n'ayant pas nécessairement la capacité d'interrompre une action engagée, il peut se produire un évènement dans lequel, lors de l'appui progressif sur la pédale d'accélérateur par le conducteur, un ou plusieurs changements de rapport interviennent pendant ou juste après le couplage du train de roue à la machine motrice. Les changements de rapport se produisant juste après le couplage du train de roue allongent le temps de mise à disposition du couple souhaité par le conducteur et génèrent une accélération en « plusieurs temps » du véhicule qui affecte l'agrément de conduite.

On connait en outre du document de brevet EP-A1-2589839 un dispositif de commande de roue libre qui exécute une commande de roue libre pour désengager un embrayage et abaisser le nombre de tours par minute d'un moteur jusqu'à un certain nombre de tours au ralenti par minute lorsque le moteur ne fonctionne pas pour l'extérieur du moteur alors que le véhicule est en mouvement, ce dispositif de commande de roue libre comprenant un moyen d'interdiction de changement de vitesse pour empêcher une opération de changement de vitesse pendant la commande de roue libre en verrouillant un levier de changement de vitesse. Le document US 6 834 224 B2 décrit aussi un procédé de commande.

Il est donc souhaitable d'apporter une solution aux inconvénients susmentionnés de l'état de la technique en proposant un procédé perfectionné pour la commande du couplage d'un train de roue à une machine motrice dans une chaîne de traction de véhicule intégrant une boîte de vitesse automatique.

Selon un premier aspect, l'invention concerne un procédé de commande de couplage d'un train de roue à une machine motrice dans une chaîne de traction d'un véhicule, la chaîne de traction comprenant une boîte de vitesse automatique et un organe de couplage avec la machine motrice, et le procédé comprenant : une fourniture par un calculateur du véhicule d'une commande de couplage destinée à l'organe de couplage en fonction d'un actionnement d'une pédale d'accélérateur du véhicule. Conformément à l'invention, le procédé comprend :
- une détection d'un actionnement de type prédéterminé de la pédale d'accélérateur susceptible de provoquer au moins un changement de rapport dans la boîte de vitesse automatique, et
- une inhibition de la commande de couplage de façon à interdire une transmission de couple par l'organe de couplage lorsqu'est détecté l'actionnement de type prédéterminé, et
- un calcul d'un gradient signé d'une position de la pédale d'accélérateur et des comparaisons d'une amplitude du gradient signé à des seuils haut et bas, l'actionnement de type prédéterminé étant détecté lorsque l'amplitude franchit le seuil haut, ledit procédé comprenant une durée de confirmation qui est nécessaire pour une annulation de l'inhibition de la commande de couplage, l'annulation intervenant lorsque l'amplitude du gradient signé n'excède pas le seuil bas pendant la durée de confirmation.

Selon une caractéristique particulière, l'actionnement de type prédéterminé est un appui progressif sur la pédale d'accélérateur.

Selon encore une autre caractéristique particulière, les seuils haut et bas ont des valeurs paramétrables.

Selon encore une autre caractéristique particulière, la durée de confirmation a une valeur paramétrable.

Selon un autre aspect, l'invention concerne aussi un calculateur comportant une mémoire stockant des instructions de programme pour la mise en oeuvre du procédé tel que décrit brièvement ci-dessus.

L'invention concerne aussi véhicule équipé d'une boîte de vitesse automatique et comprenant un calculateur tel que décrit ci-dessus.

D'autres avantages et caractéristiques de la présente invention apparaîtront plus clairement à la lecture de la description détaillée ci-dessous de plusieurs modes de réalisation particuliers de l'invention, en référence aux dessins annexés, dans lesquels :
[Fig.1] La Fig.1 est un bloc-diagramme schématique d'un groupe motopropulseur de véhicule et d'un calculateur de commande dans lequel est hébergé un module logiciel mettant en oeuvre un mode de réalisation particulier du procédé selon l'invention.
[Fig.2] La Fig.2 est un logigramme de principe pour la description du procédé selon l'invention

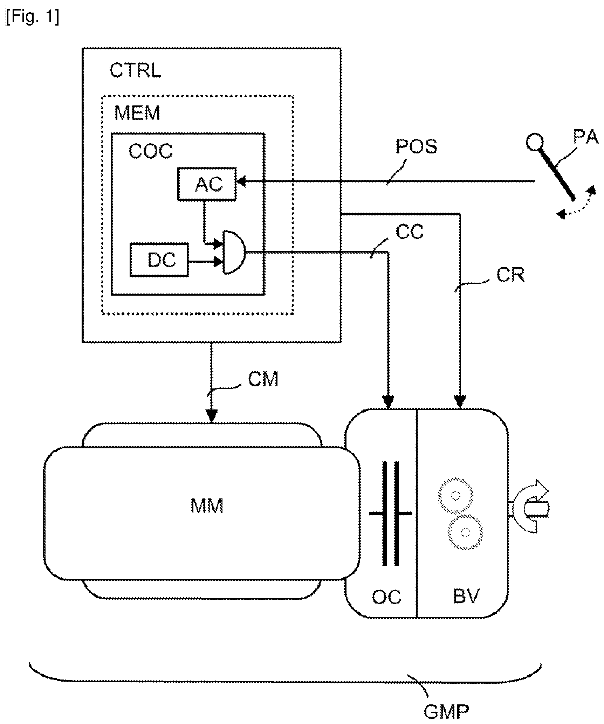

En référence à la Fig.1, il est considéré un véhicule comprenant un groupe motopropulseur GMP dédié à un train de roue du véhicule. Le groupe motopropulseur GMP comporte une machine motrice MM et une boîte de vitesse automatique BV. Un organe de couplage OC, par exemple un embrayage à sec, assure la fonction de couplage du train de roue à la machine motrice MM. Lorsque l'organe de couplage OC est dans un état de fermeture, un couple moteur, fourni par la machine motrice MM, est transmis vers la boîte de vitesse BV et le train de roue. Un état d'ouverture de l'organe de couplage OC interdit la transmission d'un couple moteur de la machine motrice MM vers la boîte de vitesse RV et la train de roue.

Dans le véhicule, un calculateur CTRL assure la commande du groupe motopropulseur GMP en appliquant des stratégies de commande aptes à répondre aux différentes situations de vie du véhicule. Le calculateur CTRL met en oeuvre les stratégies de commande en fonction des actions du conducteur sur différents organes de commande du véhicule, comme la pédale d'accélération, et des informations en provenance de différents capteurs. Les informations provenant de capteurs et autres organes, nécessaires pour les stratégies de commande, sont lues par le calculateur CTRL typiquement sur le réseau de communication de données du véhicule, par exemple de type bus « CAN ».

La commande de l'organe de couplage OC conformément au procédé de l'invention est réalisée par un module logiciel COC qui est hébergé et exécuté dans le calculateur CTRL. Le module logiciel COC est implanté dans une mémoire MEM du calculateur CTRL. Le procédé de l'invention est mis en oeuvre par l'exécution d'instructions de code de programme du module logiciel COC par un processeur (non représenté) du calculateur CTRL.

Comme montré schématiquement à la Fig.1, le module logiciel COC reçoit en entrée une position POS de la pédale d'accélérateur PA du véhicule et délivre une commande de couplage CC qui est destinée à l'organe de couplage OC.

D'autres modules logiciels, non représentés à la Fig.1, différents du module logiciel COC, sont également hébergés dans le calculateur CTRL pour la commande de la boîte de vitesse BV et de la machine motrice MM. A la Fig.1, sont représentées une commande de changement de rapport CR fournissant à la boîte de vitesse BV une consigne de rapport à engager et une commande de machine motrice CM fournissant à la machine motrice MM une consigne de régime / couple.

La commande de couplage CC est la commande d'actionnement effective de l'organe de couplage OC et est déterminée conformément au procédé de l'invention. L'état logique actif, « 1 », et l'état logique inactif, « 0 », de la commande de couplage CC déterminent respectivement l'état de fermeture et l'état d'ouverture de l'organe de couplage OC.

Comme représenté schématiquement à la Fig.1, dans le procédé de l'invention, la commande de couplage CC est établie par une fonction logique « ET » entre une demande de couplage DC et une autorisation de couplage AC.

La demande de couplage DC est déterminée de manière connue, comme décrit plus haut dans les commentaires relatifs à l'état de la technique (cf. « première fonction »). L'état logique « 1 » et l'état logique « 0 » déterminent respectivement une demande de couplage DC active et une demande de couplage DC inactive.

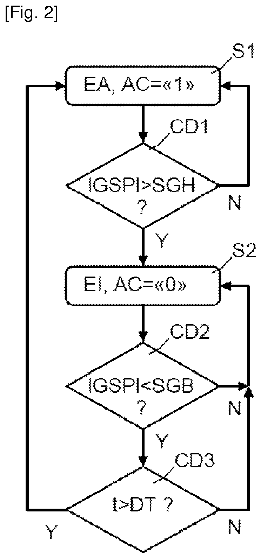

L'autorisation de couplage AC prévue dans le procédé de l'invention est déduite par calcul, en considérant l'évolution dans le temps de la position POS de la pédale d'accélérateur PA de façon à détecter un appui progressif sur la pédale d'accélérateur PA susceptible d'induire des changements de rapport après la fermeture de l'organe de couplage OC. L'état logique « 1 » et l'état logique « 0 » déterminent respectivement une autorisation de couplage AC active et une autorisation de couplage AC inactive. En référence maintenant plus particulièrement à la Fig.2, il est décrit en détail ci-dessus le procédé selon l'invention mis en oeuvre pour corriger de manière dynamique la commande de couplage CC et empêcher la survenue des inconvénients indiqués plus haut dans les commentaires relatifs à l'état de la technique.

Dans l'invention, afin d'éviter les multiples changements de rapport pouvant survenir après le couplage du train de roue à la machine motrice MM, la demande de couplage CC est invalidée (AC = « 0 ») lorsqu'est détecté un appui progressif sur la pédale d'accélérateur PA, jusqu'à ce que la pédale d'accélérateur PA n'évolue plus ou très peu. En d'autres termes, cela revient à retarder la fermeture de l'organe de couplage OC pendant l'enfoncement progressif de la pédale d'accélérateur PA de façon à ce que les changements de rapport se produisent avant la fermeture effective de l'organe de couplage OC. L'appui progressif sur la pédale d'accélérateur PA est détecté à l'aide du gradient signé de la position POS de la pédale d'accélérateur PA, désigné GSP par la suite. Ainsi, le gradient signé GSP est donné par l'égalité GSP = d(POS)/dt. Le gradient signé GSP et des comparaisons de l'amplitude de celui-ci à des seuils paramétrables haut et bas, SGH et SGB, permettent de décider de l'état logique à attribuer à l'autorisation de couplage AC.

Dans le logigramme de la Fig.2, les blocs S1 et S2 sont des blocs d'état et les blocs CD1 à CD3 sont des blocs conditionnels qui représentent des conditions requises pour une transition de l'état du bloc S1 vers l'état du bloc S2, et inversement.

Le bloc S1 représente un état d'autorisation EA de la fermeture de l'organe de couplage OC. Dans cet état, l'autorisation de couplage AC est active, AC = « 1 ». Le module logiciel COC fournit alors une commande de couplage CC = DC à l'organe de couplage OC qui provoque une fermeture de celui-ci si la demande de couplage DC est active, DC = « 1 ».

Le bloc S2 représente un état d'interdiction EI de la fermeture de l'organe de couplage OC. Dans cet état, l'autorisation de couplage AC est inactive, AC = « 0 ». Le module logiciel COC fournit alors une commande de couplage CC = « 0 » à l'organe de couplage OC qui maintient celui-ci ouvert quelle que soit l'état de la demande de couplage DC.

Dans les blocs conditionnels CD1 à CD3, le signe du gradient GSP permet de discriminer entre un appui sur la pédale d'accélérateur PA et un relâchement de celle-ci.

Le bloc conditionnel CD1 gère la transition de l'état d'autorisation EA du bloc S1 vers l'état d'interdiction EI du bloc S2.

Dans le bloc conditionnel CD1, lorsque le signe du gradient GSP valide une situation d'appui sur la pédale d'accélérateur PA, l'amplitude du gradient GSP est comparée au seuil haut SGH.

Dans le cas où l'amplitude du gradient GSP est supérieur au seuil haut SGH (IGSPI > SGH), il est décidé que cet appui sur la pédale d'accélérateur PA est susceptible de provoquer au moins un changement de rapport après une fermeture de l'organe de couplage OC. Le bloc conditionnel CD1 active alors une sortie Y, Y = « 1 », qui valide une transition vers le bloc S2 et donc l'état d'interdiction EI. L'autorisation de couplage AC est alors inactive, AC = « 0 », et interdit la fermeture de l'organe de couplage OC.

Dans le cas où l'amplitude du gradient GSP n'est pas supérieur au seuil haut SGH, il est décidé que cet appui sur la pédale d'accélérateur PA n'est pas susceptible de provoquer de changement de rapport après une fermeture de l'organe de couplage OC. Le bloc conditionnel CD1 active alors une sortie N, N = « 1 », qui valide un bouclage sur le bloc S1 et donc l'état d'autorisation EA. L'autorisation de couplage AC reste donc active, AC = « 1 », et autorise la fermeture de l'organe de couplage OC.

Les blocs conditionnels CD2 et CD3 gèrent la transition de l'état d'interdiction EI du bloc S2 vers l'état d'autorisation EA du bloc S1.

Dans le bloc conditionnel CD2, lorsque le signe du gradient GSP valide une situation d'appui sur la pédale d'accélérateur PA, l'amplitude du gradient GSP est comparée au seuil bas SGB.

Dans le cas où l'amplitude du gradient GSP est inférieure au seuil bas SGB (IGSBI < SGB), il est détecté une faible évolution de la pédale d'accélérateur PA, non susceptible de provoquer de changement de rapport après une fermeture de l'organe de couplage OC. Le bloc conditionnel CD2 active alors une sortie Y, Y = « 1 », qui enclenche un comptage d'une durée de confirmation DT dans le bloc conditionnel CD3. La durée de confirmation DT du bloc conditionnel CD3 est paramétrable et permet de confirmer une persistance suffisante de la détection IGSBI < SGB du bloc CD2.

Dans le bloc conditionnel CD3, si la détection IGSBI < SGB du bloc CD2 persiste pendant un temps t supérieur à la durée de confirmation DT (t > DT), le bloc conditionnel CD2 active alors une sortie Y, Y = « 1 », qui valide une transition vers le bloc S1 et donc un retour vers l'état d'autorisation EA. L'autorisation de couplage AC est alors active, AC = « 1 », et autorise la fermeture de l'organe de couplage OC. Dans le cas contraire, c'est-à-dire, si la détection IGSBI < SGB s'interrompt avant la fin de la durée de confirmation DT (t > DT), le bloc conditionnel CD2 active alors une sortie N, N = « 1 », qui valide un bouclage sur le bloc S2 et donc l'état d'interdiction EI. L'autorisation de couplage AC reste donc inactive, AC = « 0 », et interdit la fermeture de l'organe de couplage OC.

Dans le bloc conditionnel CD2, si l'amplitude du gradient GSP ne descend pas en dessous du seuil bas SGB, il est détecté une évolution significative de la pédale d'accélérateur PA, évolution qui reste susceptible de provoquer un changement de rapport après une fermeture de l'organe de couplage OC. Le bloc conditionnel CD2 active alors une sortie N, N = « 1 », qui valide un bouclage sur le bloc S2 et donc l'état d'interdiction EI. L'autorisation de couplage AC reste donc inactive, AC = « 0 », et interdit la fermeture de l'organe de couplage OC.

A titre d'exemple, en considérant que la position POS de la pédale d'accélérateur est mesurée en pourcentage d'une course totale de la pédale, entre un état de relâchement complet de la pédale, correspondant à POS = 0%, et un état d'enfoncement complet de la pédale, correspondant à POS = 100%, les valeurs suivantes pourront être attribuées aux seuil haut SGH, seuil bas SGB et à la durée de confirmation DT :
SGH = 200 %/s (paramétrable dans une plage de 0 à 10000 %/s) ;
SGB = 50 %/s (paramétrable dans une plage de 0 à 10000 %/s) ; et
DT = 100 ms (paramétrable dans une plage de 0 à 1000 ms).

On notera que l'unité de mesure de la position POS pourra être le millimètre (mm), le degré d'angle (°) ou le radian.

Dans la présente invention, les résultats de la comparaison du gradient signé de la position de la pédale d'accélération à des seuils haut et bas servent de critère de décision pour le couplage d'un train de roue dans une transmission avec boîte de vitesse automatique, dans le cas d'un appui progressif de la pédale d'accélérateur par le conducteur. L'invention procure une « correction dynamique » appliquée à la demande de couplage du train de roue qui s'active dans le cas d'un appui progressif de la pédale d'accélérateur par le conducteur. Grâce à l'invention, une demande de couplage du train de roue ne sera validée qu'après stabilisation du rapport à engager dans la boîte de vitesse. Le couplage du train de roue pourra intervenir directement sur ce rapport, et donc plus rapidement. Le phénomène susmentionné d'accélération en plusieurs temps est ainsi évité et l'agrément de conduite est amélioré lors des reprises.

L'invention ne se limite pas aux modes de réalisation particuliers qui ont été décrits ici à titre d'exemple. L'homme du métier, selon les applications de l'invention, pourra apporter différentes modifications et variantes entrant dans le champ de protection de l'invention.

## Revendications

1. Procédé de commande de couplage d'un train de roue à une machine motrice (MM) dans une chaîne de traction d'un véhicule, ladite chaîne de traction comprenant une boîte de vitesse automatique (BV) et un organe de couplage (OC) avec ladite machine motrice (MM), ledit procédé comprenant une fourniture par un calculateur (CTRL) dudit véhicule d'une commande de couplage (CC) destinée audit organe de couplage (OC) en fonction d'un actionnement d'une pédale d'accélérateur (PA) dudit véhicule, **caractérisé en ce qu'**il comprend :
- une détection (CD1, SGH) d'un actionnement de type prédéterminé de ladite pédale d'accélérateur (PA) susceptible de provoquer au moins un changement de rapport dans ladite boîte de vitesse automatique (BV), et
- une inhibition (S2, EI, AC) de ladite commande de couplage (CC) de façon à interdire une transmission de couple par ledit organe de couplage (OC) lorsqu'est détecté ledit actionnement de type prédéterminé, et
- un calcul d'un gradient signé (GSP) d'une position (POS) de ladite pédale d'accélérateur (PA) et des comparaisons d'une amplitude (IGSPI) dudit gradient signé (GSP) à des seuils haut et bas (SGH, SGB), ledit actionnement de type prédéterminé étant détecté lorsque ladite amplitude (IGSPI) franchit ledit seuil haut (SGH), ledit procédé comprenant une durée de confirmation (CD3, DT) qui est nécessaire pour une annulation (S1, EA) de ladite inhibition (S2, EI) de ladite commande de couplage (CC), ladite annulation (S1, EA) intervenant lorsque ladite amplitude (IGSPI) dudit gradient signé (GSP) n'excède pas (CD2) ledit seuil bas (SGB) pendant ladite durée de confirmation (CD3, DT).

2. Procédé selon la revendication 1, **caractérisé en ce que** ledit actionnement de type prédéterminé est un appui progressif sur ladite pédale d'accélérateur (PA).

3. Procédé selon la revendication selon l'une des revendications précédentes, **caractérisé en ce que** lesdits seuils haut et bas (SGH, SGB) ont des valeurs paramétrables.

4. Procédé selon l'une des revendications précédentes, **caractérisé en ce que** ladite durée de confirmation (DT) a une valeur paramétrable.

5. Calculateur (CTRL) comportant une mémoire (MEM) stockant des instructions de programme pour la mise en oeuvre du procédé selon l'une quelconque des revendications 1 à 4.

6. Véhicule équipé d'une boîte de vitesse automatique (BV), **caractérisé en ce qu'**il comprend un calculateur (CTRL) selon la revendication 5.

7. Véhicule selon la revendication 6, **caractérisé en ce qu'**il est de type à motorisation hybride.

## Patentansprüche

1. Verfahren zur Steuerung der Kopplung eines Räderwerks mit einer Antriebsmaschine (MM) in einer Traktionskette eines Fahrzeugs, wobei die Traktionskette ein Automatikgetriebe (BV) und ein Kopplungselement (OC) mit der Antriebsmaschine (MM) umfasst Verfahren, das die Lieferung eines für das Kupplungselement (OC) bestimmten Kupplungsbefehls (CC) durch einen Computer (CTRL) des Fahrzeugs in Abhängigkeit von der Betätigung eines Gaspedals (PA) des Fahrzeugs umfasst, **dadurch gekennzeichnet, dass** es Folgendes umfasst:
- eine Erkennung (CD1, SGH) einer Betätigung des Gaspedals (PA) einer vorbestimmten Art, die mindestens einen Gangwechsel im Automatikgetriebe (BV) bewirken kann, und
- eine Sperrung (S2, EI, AC) der Kupplungssteuerung (CC), um die Übertragung eines Drehmoments durch das Kupplungselement (OC) zu verhindern, wenn die Betätigung einer vorbestimmten Art erfasst wird, und
- eine Berechnung eines vorzeichenbehafteten Gradienten (GSP) einer Position (POS) des Gaspedals (PA) und Vergleiche einer Amplitude (IGSPI) des vorzeichenbehafteten Gradienten (GSP) bei hohen und niedrigen Schwellenwerten (SGH, SGB), der Betätigung eines vorbestimmten Typs, der erkannt wird, wenn die Amplitude (IGSPI) den hohen Schwellenwert (SGH) überschreitet, sagte Methode , die eine Bestätigungsdauer (CD3, DT) umfasst notwendig für die Aufhebung (S1, EA) der Hemmung (S2, EI) des Kopplungsbefehls (CC), wobei die Aufhebung (S1, EA) erfolgt, wenn die Amplitude (IGSPI) des vorzeichenbehafteten Gradienten (GSP) (CD2) nicht überschreitet) besagter niedriger Schwellenwert (SGB) während besagter Bestätigungsdauer (CD3, DT).

2. Verfahren nach Anspruch 1, **dadurch gekennzeichnet, dass** die Betätigung vorgegebener Art ein fortschreitendes Drücken des Gaspedals (PA) ist.

3. Verfahren nach einem der vorhergehenden Ansprüche, **dadurch gekennzeichnet, dass** die oberen und unteren Schwellenwerte (SGH, SGB) konfigurierbare Werte haben.

4. Verfahren nach einem der vorhergehenden Ansprüche, **dadurch gekennzeichnet, dass** die Bestätigungsdauer (DT) einen konfigurierbaren Wert hat.

5. Computer (CTRL), der einen Speicher (MEM) umfasst, der Programmanweisungen zur Implementierung des Verfahrens nach einem der Ansprüche 1 bis 4 speichert.

6. Fahrzeug, das mit einem Automatikgetriebe (BV) ausgestattet ist, **dadurch gekennzeichnet, dass** es einen Computer (CTRL) nach Anspruch 5 umfasst.

7. Fahrzeug nach Anspruch 6, **dadurch gekennzeichnet, dass** es vom Typ Hybridmotor ist

## Claims

1. Method for controlling the coupling of a wheel train to a driving machine (MM) in a traction chain of a vehicle, said traction chain comprising an automatic gearbox (BV) and a coupling member (OC) with said driving machine (MM), said method comprising a supply by a computer (CTRL) of said vehicle of a coupling command (CC) intended for said coupling member (OC) as a function of actuation of an accelerator pedal (PA) of said vehicle, **characterized in that** it comprises:
- a detection (CD1, SGH) of an actuation of a predetermined type of said accelerator pedal (PA) capable of causing at least one gear change in said automatic gearbox (BV), and
- an inhibition (S2, EI, AC) of said coupling control (CC) so as to prohibit transmission of torque by said coupling member (OC) when said actuation of predetermined type is detected, and
- a calculation of a signed gradient (GSP) of a position (POS) of said accelerator pedal (PA) and comparisons of an amplitude (IGSPI) of said signed gradient (GSP) at high and low thresholds (SGH , SGB), said actuation of predetermined type being detected when said amplitude (IGSPI) crosses said high threshold (SGH),
said method comprising a confirmation duration (CD3, DT) which is necessary for cancellation (S1, EA) of said inhibition (S2, EI) of said coupling command (CC), said cancellation (S1, EA) occurring when said amplitude (IGSPI) of said signed gradient (GSP) does not exceed (CD2) said low threshold (SGB) during said confirmation duration (CD3, DT).

2. Method according to claim 1, **characterized in that** said actuation of predetermined type is a progressive pressing on said accelerator pedal (PA).

3. Method according to claim according to one of the preceding claims, **characterized in that** said high and low thresholds (SGH, SGB) have configurable values.

4. Method according to one of the preceding claims, **characterized in that** said confirmation duration (DT) has a configurable value.

5. Computer (CTRL) comprising a memory (MEM) storing program instructions for implementing the method according to any one of claims 1 to 4.

6. Vehicle equipped with an automatic gearbox (BV), **characterized in that** it comprises a computer (CTRL) according to claim 5.

7. Vehicle according to claim 6, **characterized in that** it is of the hybrid motorization type
